# EUROPEAN PATENT SPECIFICATION

(11) **EP 2 247 403 B1**
(45) Date of publication and mention of the grant of the patent: **01.04.2015**
(21) Application number: 09710286.7
(22) Date of filing: 10.02.2009
(51) Int. Cl.: H01H 9/08

(54) **TRIGGER UNIT FOR AN ARC WELDING OR CUTTING DEVICE AND RELATED DEVICE AND SYSTEM**
SCHALTUNGSEINHEIT FÜR EINE LICHTBOGENSCHWEISSVORRICHTUNG, BZW. SCHNEIDVORRICHTUNG, SOWIE ENTSPRECHENDE VORRICHTUNG
UNITÉ DE GÂCHETTE POUR DISPOSITIF DE DÉCOUPE OU DE SOUDAGE À ARC, DISPOSITIF ET SYSTÈME ASSOCIÉS

(30) Priority: 13.02.2008 IT VI20080038
(43) Date of publication of application: 10.11.2010
(73) Proprietor: Trafimet S.p.A., 36020 Castegnero (VI) (IT)
(72) Inventor: TREVISIOL, Giuliano, I-36100 Vicenza (IT); SIMIONI, Ugo, I-36100 Vicenza (IT)
(74) Representative: Ziliotto, Tiziano
(86) International application number: PCT/IB2009/000355
(87) International publication number: WO 2009/101532

(56) References cited:
- EP-A- 0 689 895
- EP-A- 1 287 935
- EP-A2- 0 676 819

## Description

The present invention concerns the sector of welding and/or plasma cutting.

In particular, the present invention concerns a control member used in arc welding and/or cutting devices like for example plasma cutting systems.

More specifically, the present invention refers to a control member suited to be installed in a welding device generally called welding torch and used, for example, in arc welding systems, preferably of the so-called MIG or TIG type. The same control member can also be installed in cutting devices, generally called torches, used for example in plasma cutting systems.

The invention also concerns a related welding or cutting device.

The invention also concerns a related welding or cutting system.

As is known, welding or cutting devices, either manual or automatic, usually called torches, are devices which comprise a service cable connected to a torch body with a hand grip that is insulated from the torch body, a welding or cutting head and a control member.

The hand grip comprises one or more parts removably associated with the torch body.

The control member consists of a trigger provided with members suited to ensure its mechanical connection with the torch body or the hand grip. The trigger is constituted by a moving element that mechanically operates a first electrical terminal in such a way as to electrically connect it with a second electrical terminal. The above mentioned terminals are provided with electrical connection means suited to connect them with second electrical connection means which communicate, via the above mentioned service cable, with the power unit of the generator of the welding and/or cutting system.

The position of the above mentioned control member varies according to the type of device to which it is applied. More particularly, said member can be positioned on the upper or lower part of the hand grip. If said member is positioned on the upper part of the hand grip, the operator can activate it with his/her thumb. This position ensures highest protection against welding spatter and against irradiation from the cutting and/or welding area. On the other hand, the position of the thumb does not favour the relaxation in the hand muscles, which is quite tiring for the operator.

On the other hand, in the solutions where the control member is positioned on the lower part of the hand grip a more ergonomic configuration is ensured, since the operator can press the trigger with his/her forefinger or middle finger, while naturally closing his/her hand around the hand grip.

According to the known art, two types of electrical control members, that is, triggers, have been proposed.

The first type is a trigger with simple closing contact, while the second type is an electric trigger consisting of a microswitch.

From the point of view of construction, the first solution is simpler and less expensive and its operation depends on the operator's speed.

The operation of the second type of trigger depends on the speed of a spring positioned inside the electric trigger, which is capable of closing the contact in just a few thousandths of a second.

In practice, the operator activates the trigger by pressing the moving element which closes the circuit that controls the generator, thus starting the welding or cutting cycle. More particularly, when the operator activates the trigger, he/she starts one or more of the following steps: passage of the protection gas, passage of current, feeding of the welding wire.

A first drawback posed by the first solution described above is represented by the limited life of the electric trigger, which is due to the rapid wear of the contacts caused by the sparks produced during opening and closing of the electrical contact.

A drawback posed by the second solution lies in that, even though it lasts longer than the first one, it is expensive.

In other words, the first solution with simple contact is preferable because it is less expensive and more resistant than the microswitch, but it lasts less, while the solution with the microswitch, though ensuring a longer average life than the triggers with simple contact, poses the drawback of being rather expensive. Both solutions, however, require the periodical replacement of the control member due to failures or to the natural wear of the electric trigger.

In fact, the control members wear out and it is indispensable to periodically replace them. This is also due to the fact that the cutting and/or welding torches operate in a hostile environment and more particularly are subjected to thermal stresses due to the irradiation produced by the electric arc and to mechanical stresses due to the impacts caused by the falling of the tool and/or the hammering on the welded piece to eliminate slag, as well as by contamination with welding and/or cutting dust and slag that come into contact with the trigger and penetrate all the interspaces, thus clogging the mechanical operating devices and covering all the inner components with a conductive coat.

This wear makes the contact unstable and hinders the movements of the moving parts of the control member which, in the worst case, may determine the jamming of the control member in the contact position, with consequent risks for the user's safety.

Another drawback posed by both the known solutions is represented by the fact that to install the control member it is necessary to remove the hand grip from the torch body.

A further drawback connected with the previous one lies in that the replacement of the control member must be carried out by specialist personnel since, as explained above, it is necessary to remove the hand grip completely, thus exposing electrical parts that may be live and thus may potentially be dangerous for the user. Furthermore, said operation must be carried out with great care, in order to avoid damaging the parts that have become exposed after removal of the hand grip, for example electric parts, control cables or other parts like insulating elements.

Further examples of a control member for a welding or cutting device according to the prior art are known from documents EP 1 287 935 A and EP 0 689 895 A.

In view of the situation described above, a control member for welding and/or cutting devices which overcomes or at least limits the drawbacks posed by the known art would be desirable. A control member for welding and/or cutting devices which overcomes the drawbacks encountered in the control members described above would therefore be desirable.

It is therefore evident from the above that there is the need to identify alternative solutions which are more functional than the known solutions.

In particular, it is a first object of the invention to produce a control member for welding and/or cutting devices that can be easily and promptly replaced in case of failure.

It is a further object of the invention to produce a control member that can be easily replaced, even by unskilled personnel.

It is another object of the invention to produce a control member during the installation and/or replacement of which the user doesn't run the risk of damaging the device.

It is another object of the invention to produce a control member that is reliable and inexpensive compared to the equivalent control members of the known type.

It is a further object of the invention to produce a control member that makes it possible to reduce the maintenance costs of the welding and/or cutting device. The objects described above are achieved by a control member for welding and/or cutting devices and by a related welding and/or cutting device, as well as by a related welding and/or cutting system carried out in accordance with the contents of the independent claim 1.

According to a first embodiment, the present invention relates to a control member for a welding or cutting device as claimed in claim 1.

Advantageous embodiments of the invention are described in the dependent claims.

According to a further embodiment the present invention relates to a welding device as claimed in claim 8, namely a welding device comprising a torch body, a hand grip, a welding head and a control member received in a seat, wherein said control member is made in accordance with the previous description. According to a further embodiment the present invention relates to a cutting device as claimed in claim 9, namely a cutting device comprises a torch body, a hand grip, a welding head and a control member received in a seat, wherein said control member is made in accordance with the previous description

According to a further embodiment the present invention relates to a device as claimed in claim 10, wherein said seat housing said control member is created in said hand grip or in said torch body.

According to a further embodiment the present invention relates to a welding system as claimed in claim 11, namely a welding system comprises a generator connected to a welding device via a cable, wherein said welding device is produced in accordance with the previous description.

According to a further embodiment the present invention relates to a plasma cutting system, namely a plasma cutting comprising a generator connected to a welding device via a cable, wherein said cutting device is produced in accordance with the previous description.

The proposed solution advantageously makes it possible to produce a control member that can be replaced in a few seconds, so that the functionality of the torch can be rapidly restored in case of failure.

Again advantageously, the proposed solution permits production of a control member that can be easily replaced even by unskilled personnel.

Again advantageously, the proposed solution permits production of a control member that can be easily replaced with no need to open the hand grip.

Again advantageously, the proposed solution makes it possible to avoid any damage to the parts housed inside the hand grip, like for example the control cables.

Again advantageously, the proposed solution makes it possible to reduce maintenance costs, as the welder can personally change the control member with no need to ask for the intervention of a specialist operator.

Again advantageously, the proposed solution makes the control member replacement procedure safe, as no live electrical parts are accessible.

Again advantageously, the proposed solution makes it possible to produce a control member that can be perfectly integrated in the shape of the torch, to the benefit of the cleanliness and sturdiness of the torch itself.

The objects and advantages illustrated above will be highlighted in greater detail in the description of some preferred embodiments of the invention, provided as non-limiting examples with reference to the attached drawings, wherein:
Figure 1 shows a lateral view of a welding device subject of the invention provided with a control member also subject of the invention;
Figure 2 shows an axonometric exploded view of the device shown in Figure 1;
Figure 3 shows an axonometric view of the control member shown in Figure 1;
Figure 4 shows a lateral view of the control member shown in Figure 3;
Figure 5 shows a plan view of the control member shown in Figure 3;
Figure 6 shows a longitudinal cross section of the control member shown in Figure 3;
Figure 6a shows a longitudinal cross section of a further example of embodiment of a control member subject of the invention;
Figure 7 shows a longitudinal cross section of the device shown in Figure 1 with the control member installed thereon;
Figure 8 shows a longitudinal cross section of the device shown in Figure 1 with the control member removed therefrom;
Figure 8a shows a perspective view of the device shown in Figure 1 with the control member removed therefrom;
Figures 9 and 10 show each a lateral view of the device shown in Figure 1 during the installation of the control member;
Figure 11 shows an axonometric view of another step of the installation of the control member;
Figure 12 shows a lateral view of the device shown in Figure 1 with the control member installed thereon;
Figure 13 shows an axonometric view of the device shown in Figure 1 during the removal of the control member;
Figures 14 to 16 show each a lateral view of the device shown in Figure 1 during the removal of the control member.

By way of introduction, it is important to point out that corresponding components in different examples of embodiment are indicated by the same reference numbers.

In the case of a change in the position of the parts that make up the invention, the position indications given in the individual executive examples must be transferred, according to logic, to the new position.

It is also important to underline that, for a better understanding of the schematic diagrams attached, some parts of the non-limiting examples of embodiment shown can be represented using dotted lines.

While the following description, made with reference to the Figures, illustrates some particular embodiments of the present invention, it is clear that the invention is not limited to said particular embodiments, rather, the individual embodiments described here below clarify different aspects of the present invention, the scope and purpose of which are defined in the claims.

With reference to the attached figures, a first embodiment of a control member for welding devices according to the present invention is described here below. In particular, the description provided below concerns a control member for a welding device, also called torch, of the so-called MIG type.

The same solution can obviously be applied to all the control members suited to be used in other types of welding devices in general, for example of the TIG or arc or electrode type presenting analogous characteristics.

The same solution can furthermore be applied to all the control members suited to be installed on cutting devices like for example plasma torches.

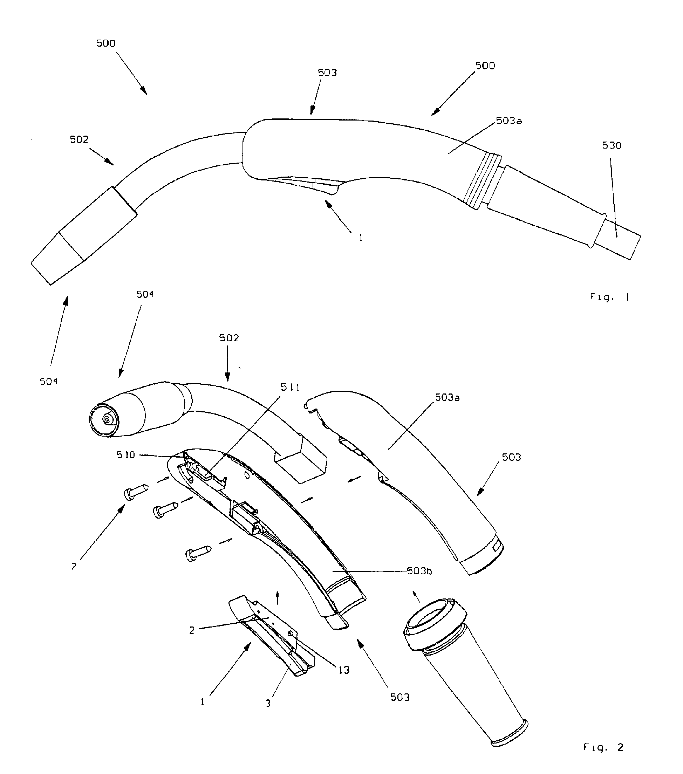

A non-limiting example of embodiment of a control member for a welding or cutting device applied to a related device also constituting the subject of the present invention is shown in Figures 1 and 2, where these parts are indicated as a whole and respectively by numbers 1 and 500.

The device 500 comprises a service cable 530, a torch body 502 with a welding head 504, a hand grip 503 and a control member 1.

The hand grip 503 consists of two parts 503a and 503b removably associated with the torch body 502, for example through screws or joints or equivalent systems.

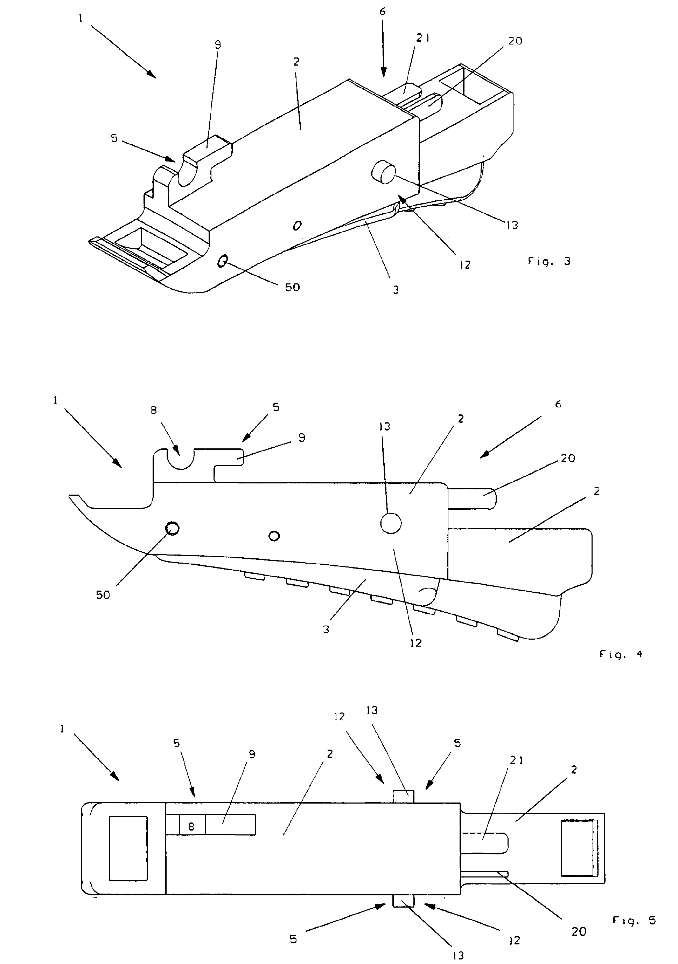

The control member 1, represented in greater detail in Figures 3 to 6, comprises a frame 2 to which a moving element 3 is hinged along an axis 50, said moving element 3 acting on a first electrical terminal 4a in order to move it toward/away from a second terminal 4b to close/open the electrical contact.

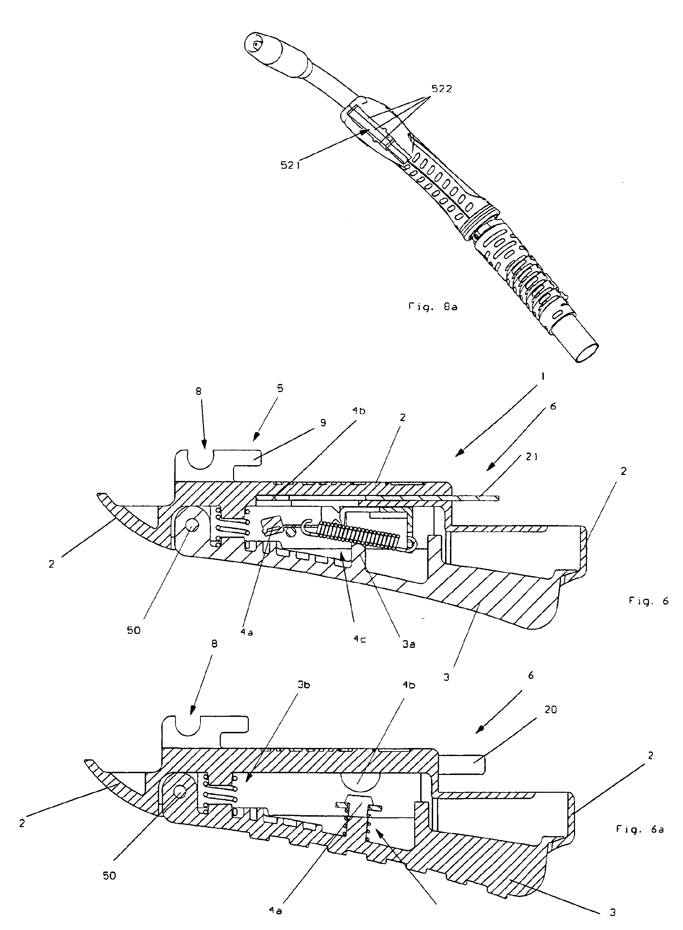

It should also be observed that the moving element 3, the so-called trigger, is maintained at rest, as shown in Figure 6, owing to the spring 3b that is interposed between the frame 2 and the element 3 itself in order to control it.

More particularly, the electrical terminals 4a and 4b are parts of a microswitch comprising the spring 4c on which the projection 3a of the moving element 3 acts to place or not the above mentioned terminals 4a, 4b in contact with each other and to close/open the electrical contact.

The frame 2 is provided with members for mechanical connection with the hand grip, indicated as a whole by number 5.

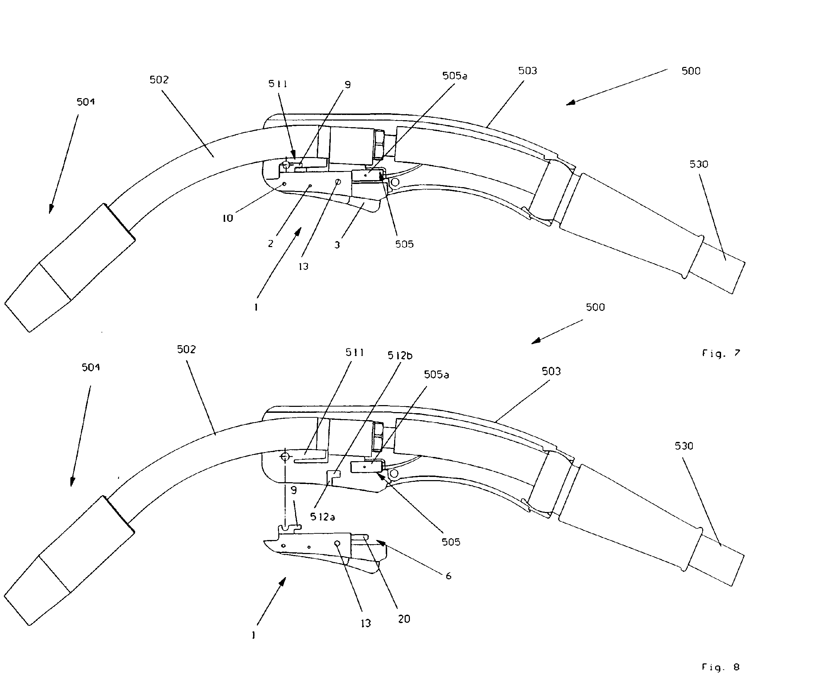

The control member 1 is provided with first electrical connection means 6 electrically communicating with the terminals 4a and 4b. Said means 6 are suited to be electrically connected via corresponding second electrical connection means 505 visible in Figures 7 and 8. The second electrical connection means are connected to one end of the service cable 540 whose other end is connected to the generator of the welding and/or cutting system not represented herein. In the case described herein the means 505 belong to the cable 540. It is clear that in other embodiments of the invention the means 505 may be integral with the torch body 502.

According to the invention, the mechanical connection means 5 are suited to allow the control member 1 to be applied to the device 500 with no need to remove the hand grip 503 or one of its parts 503a and 503b from the torch body 502.

Again according to the invention, inside the hand grip 503 there is a seat 521, visible in particular in Figure 8a, suited to accomodate the removable control member 1.

It is clear that in other solutions said seat 521 can be completely or partially made in the torch body 502.

It should also be observed that the seat 521 suited to accomodate the control member 1 is provided with walls 522 and joints that tend to limit as much as possible the penetration of dust inside the hand grip 503 that houses the torch body 502, visible in particular in Figure 8a. It must be noted that the seat is closed at the bottom and on all sides, in such a way as to prevent the operator and external agents from accessing the parts housed inside the hand grip.

It should be noted that the frame 2 is of the self-bearing type and is thus capable of ensuring adequate protection against the penetration of dust inside the control member 1.

According to the preferred embodiment of the invention illustrated herein, the mechanical connection means 5 comprise a locking screw 7, visible in Figure 2 and suited to be inserted in a first housing 8 made in the frame 2, shown in Figures 3 to 5, and in a second hole 510 made in the hand grip 503.

The mechanical connection means 5 also comprise at least one projection 9 suited to fit in a seat 511 made in the hand grip 503, as can be seen in Figures 7 and 8.

Always in the preferred non-limiting solution illustrated herein, the connection means 5 also comprise guide elements 12 including two substantially cylindrical protrusions 13 integral with the frame 2 and suited to be inserted in corresponding grooves 512 provided on the hand grip 503 and shown in Figure 8. More particularly, in the embodiment illustrated herein each groove comprises two rectilinear sections 512a and 512b substantially orthogonal to each other, which are obtained when the two parts 503a and 503b of the hand grip 503 are assembled together. More particularly, the first section 512a develops along a direction that is substantially orthogonal to the longitudinal axis of the device 500 and the second section 512b develops along a direction that is substantially longitudinal in relation to the device 500. This means that the installation of the control member 1 takes place, as will be described in greater detail below, following a pre-estabilished and compulsory sequence of movements that ensure safe and precise coupling of the electrical connection means 6, while guiding the operator during installation and removal of the control member 1 so that errors are prevented.

It is clear that in other embodiments of the invention the grooves may have a different shape.

It is also clear that in other embodiments not illustrated herein the screw 7 can be replaced by other elements having analogous functions, like for example joint systems or pins or equivalent systems and more generally rapid coupling/uncoupling systems.

It should furthermore be noted that, advantageously, the joint systems allow the control member 1 to be connected and/or removed with no need to use tools of any type.

It should also be noted that advantageously the control member 1 is constituted by a closed element provided with the above mentioned electrical connection means 6 that are accessible from the outside and preferably comprise at least two projecting electrical elements 20 and 21 suited to fit in corresponding housings in the second electrical connection means 505 belonging to the torch body 502 or to the hand grip 503.

More particularly, the frame 2 is closed and comprises two or more parts removably connected to one another via joints or other systems in order to allow access to the inside of the compartment defined by the frame 2 where the electrical terminals 4a and 4b are housed.

This solution advantageously prevents access from the outside to the possibly live electrical parts of the device 500 when the control member 1 is removed or is not installed. In particular, the proposed solution advantageously prevents access from the outside to the torch body 502 when the control member 1 is removed.

It is clear that alternatively the electrical connection means 6 can consist of at least two housings suited to accomodate corresponding projecting electrical components belonging to the torch body 502 or to the hand grip 503 and arranged in such a way as not to be accessible to the operator when the control member 1 isn't in its position.

It should be noted that in the example illustrated herein the seats suited to accomodate the elements 20 and 21 belong to a two-way rapid connection element 505.

It is clear that in other embodiments said means 6 can be constituted by analogous elements such as electrical outlets or plugs and more generally by male and/or female connectors preferably with rapid coupling and one or more ways.

It should be observed that, in the non-limiting example of embodiment represented herein, the control member 1 is positioned on the lower part of the hand grip 503. This position ensures greater ergonomy, since the operator can press the trigger with his/her forefinger or middle finger, while naturally closing his/her hand around the hand grip 503.

It is also clear that in other embodiments of the invention the control member 1 can be positioned on the upper part of the hand grip 503.

It is also clear that in this case the control member 1 can be operated by the operator's thumb.

This position ensures highest protection from spatter and irradiation coming from the cutting and/or welding area.

As far as the microswitch is concerned, it can be replaced by a simple contact closing trigger, without the spring 4c, as shown in particular in the example of Figure 6a.

Advantageously, said solution is simpler and less expensive from the point of view of construction, with the prompt operation of the torch 500 depending on the operator, while in the solution shown in Figure 6, with the so-called microswitch, prompt operation depends on the internal spring 4c that allows the electrical contacts to be closed in just a few thousandths of a second.

According to further embodiments of the invention, the control member 1 can be constructed in such a way as to be tight or covered by a rubber or latex membrane that reduces sensitivity or prevents early aging of the material.

It should be noted that, as will be highlighted in greater detail below, the control member 1 is inserted in the seat created in the hand grip with no need for tools or special care, since the connection of the electrical contacts is properly guided.

It is also important to observe that the insertion of the screw 7, which serves to fix the hand grip to the torch body, ensures that the control member 1 is fixed and remains in the correct position also in case of impacts or if the torch falls down. The screw 7 is not fixed to the control member 1 and therefore it is electrically insulated from it.

It is also important to note that, advantageously, when the control member 1 is removed, no live part can be accessed from the outside and the torch is not affected at all.

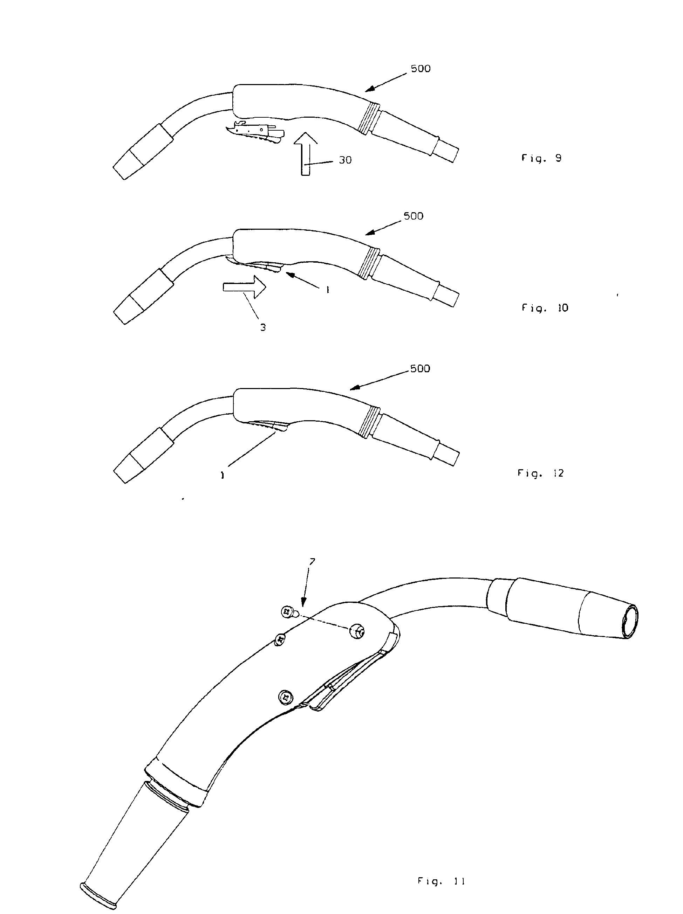

According to the invention, in order to install the control member 1 the operator arranges the control member 1 so that the two protrusions 13 are positioned at the level of the two grooves 512a, as shown in Figure 9. Successively he/she moves the control member 1 first in the direction shown by the arrow indicated by 30 in Figure 9 and then in the direction shown by the arrow indicated by 31 in Figure 10, thus inserting it in the seat 521. Owing to this movement the protrusions 13 slide inside the guide seats 512.

It is important to observe also that with this movement the operator achieves the electrical coupling of the corresponding electrical means 6 and 505 and thus the electrical connection of the control member 1 to the rest of the device 500, as well as the alignment of the housing 8 present on the frame with the holes 510 provided in the hand grip 503.

Finally, the operator inserts the screw 7 in the hole 510 and fixes it with a tool, thus locking the control member 1 in operating position as shown in Figures 11 and 12 and preventing it from moving.

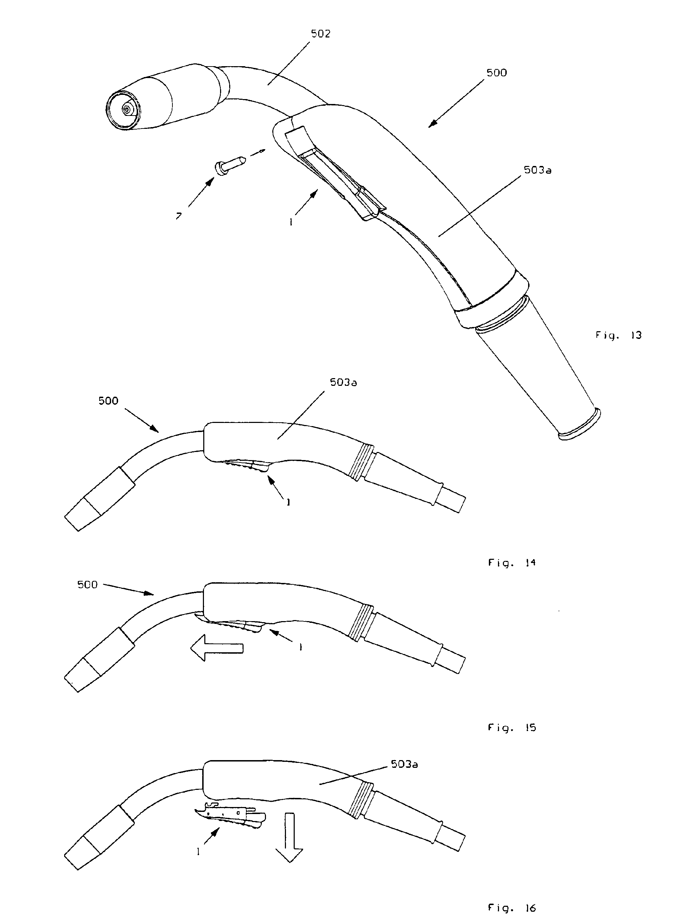

To operate the device 1, the operator just needs to press the moving element which creates the contact between the electrical terminals in order to close the circuit that controls the generator, thus starting the welding or cutting cycle. Regarding the removal of the control member 1, it is clear that the operations to be performed substantially coincide with the operations described above, with the only difference that they need to be carried out in the reverse order, as schematically shown in Figures 14 to 16.

The above clearly shows that these operations for installing and removing the control member 1 can be carried out directly on site (where the device 500 is used) and by non-specialist personnel or by the user of the device.

Furthermore, this operation does not need special care, since there is no risk of damaging any part of the torch 500.

Obviously, various modifications can be made to the control member for welding devices that is the subject of the present invention, without departing from the scope or object of the invention.

For example, the electrical connection means can be with rapid coupling but different shape, and the mechanical connection or guide means can be combined or separate or used alternately.

More particularly, some solutions may for example not include the guide means, that is, the protrusions 13 and the grooves 512a and 512b.

It should therefore be noted that the scope of the present invention is defined by the claims.

The above description clearly shows that the solution proposed allows the drawbacks described to be eliminated.

Practically, it has been ascertained that the control member for welding or cutting devices, the so-called torches, constructed according to the present invention achieves the set objectives, thus overcoming the drawbacks encountered in the state of the art. In fact, the control member constructed according to the present invention allows rapid and safe replacement to be carried out even directly on site and by unskilled operators.

It should be observed, in fact, that the structure of the control member for welding devices produced according to the present invention ensures simplification of the assembly and removal operations, thus minimising the risks of hitches, failures and/or problems during said operations. Therefore, the machine down time necessary for replacing the control member is considerably reduced. This increases the productivity of the operator, with consequent lowering of production costs in the line where the cutting or welding device is used.

In the same way, also maintenance and cleaning of the control member are greatly simplified.

In particular, in case of failure of the trigger the proposed solution advantageously allows the control member to be replaced in just a few seconds and the torch functionality to be restored even by unskilled personnel, as replacement does not involve access to live parts.

Advantageously, the proposed solution also prevents any damage to the inner parts of the torch body, like for example the control cables, due to their possible withdrawal or re-insertion with risk of cutting and/or tearing.

Again advantageously, the proposed solution reduces maintenance costs in case of malfunction due to the failure of the trigger. The operator can replace the trigger with no need to resort to the help of a maintenance man.

Still advantageously, the solution proposed ensures a simple and safe replacement procedure.

Again advantageously, the proposed solution also reduces the control member production costs.

A further advantage offered by the control member for welding devices produced according to the present invention is represented by its simplicity.

Even though the invention has been described making reference to the attached drawings, upon implementation changes can be made that shall all be considered protected by the present patent, provided that they fall within the scope of the inventive concept expressed in the following claims.

It is also important to remember that when the details mentioned in the claims below are followed by references, these must be understood as meant to improve the comprehensibility of the claim in question and not as a limit to the interpretation of the same.

Without going beyond the scope of the invention, the person skilled in the art can change and improve the control member for welding devices that is the subject of the invention as suggested by the natural evolution of the art.

It should also be underlined that all the parts can be replaced with other technically equivalent parts, that any material can be used, provided that it is compatible with the intended use, and that the various elements can have any size, depending on the needs.

## Claims

1. Control member (1) for a welding or cutting device (500) with a hand grip (503), said control member comprising means (5) for the mechanical connection to said device (500) and first electric connection means (6) suited to be coupled with corresponding second electrical connection means (505) belonging to said device (500); said mechanical connection means (5) comprising a rapid coupling/uncoupling systems, for example, locking screws (7), joint systems or pins, adapted to be received in a housing (8) of said control member (1) so as to lock said control member (1) in its final working position inside a corresponding seat (521) and at least one projection element (9) extending from said control member (1) and suited to fit in a seat (511) created in said seat (521); wherein said mechanical connection means (5) are suited to allow said control ,member (1) to be applied to said device (500) in said corresponding seat (521), without removing said hand grip (503) or one of its parts (503a, 503b); said control member (1) **characterized in that** said mechanical connection means (5) are shaped so as to allow said control member (1) to be applied to said device (500) in said seat (521), by moving first said control member (1) along a first direction (30) toward said seat (521) and by subsequently moving said control member (1) along a second direction (3) substantially perpendicular to said first direction (3), thus, disposing said control member (1) in its final working position inside said seat (521), and **in that** said first electrical connection means (6) are shaped so as to be electrically connected with said electrical connection means (505) when said control member (1) is moved along said second direction (3).

2. Control member according to any of the preceding claims, **characterized in that** said mechanical connection means (5) further comprise guide elements (12).

3. Control member according to any of the preceding claims, **characterized in that** it is a closed element provided with said electrical connection means (6) accessible from the outside.

4. Control member according to any of the preceding clams, **characterized in that** said first electrical connection means (6) are of the type with rapid coupling.

5. Control member according to any of the claims from 1) to 4), **characterized in that** said first electrical connection means (6) comprise at least one electrical terminal (20, 21) constituted by a housing.

6. Control member according to any of the preceding claims, **characterized in that** it is tight.

7. Control member according to one of the previous claims, **characterized in that** it comprises a frame (2) to which a moving element (3) is hinged along an axis (50), said moving element (3) cooperating with at least one electrical terminal (4a) in order to place it in contact with a second electrical terminal (4b) to close an electrical contact, said frame (2) being provided with said mechanical connection means (5).

8. Welding device (18) comprising a torch body (502), a hand grip (503), a welding head (504) and a control member (1) received in a seat (521), **characterized in that** said control member is made in accordance with the contents of any one of the claims from 1) to 7).

9. Cutting device comprising a torch body (502), a hand grip (503), a welding head (504) and a control member (1) received in a seat (521), **characterized in that** said control member is made in accordance with the contents of any one of the claims from 1) to 7).

10. Device according to claim 8) or 9), **characterized in that** said seat housing said control member is created in said hand grip or in said torch body.

11. Welding system comprising a generator connected to a welding device (1) via a cable (530), **characterized in that** said welding device is produced in accordance with the contents of claim 8).

12. Plasma cutting system comprising a generator connected to a cutting device via a cable (530), **characterized in that** said cutting device is produced in accordance with the contents of the claims 9) and 10).

## Patentansprüche

1. Schaltungseinheit (1) für eine Schweiß- oder Schneidvorrichtung (500) mit einem Handgriff (503), wobei die besagte Schaltungseinheit Mittel (5) für die mechanische Verbindung an die besagte Vorrichtung (500) sowie erste, elektrische Verbindungsmittel (6) umfasst, die geeignet sind, mit entsprechenden, zweiten elektrischen Verbindungsmitteln (505) gekuppelt zu werden, die zu der besagten Vorrichtung (500) gehören; wobei die besagten mechanischen Verbindungsmittel (5) ein System zur schnellen Ein- und Auskupplung umfassen wie beispielsweise Sperrschrauben (7), Verbindungssysteme oder Stifte, die geeignet sind, in einem Gehäuse (8) der besagten Schaltungseinheit (1) aufgenommen zu werden, um die besagte Schaltungseinheit (1) in ihrer endgültigen Arbeitsposition in einer entsprechenden Aufnahme (521) zu blockieren, und wenigstens ein hervorstehendes Element (9) umfassen, das aus der besagten Schaltungseinheit (1) herausragt und geeignet ist, in eine in der besagten Aufnahme (521) gebildeten Aufnahme (511) zu passen, wobei die besagten, mechanischen Verbindungsmittel (5) geeignet sind, die besagte Schaltungseinheit (1) in der besagten, entsprechenden Aufnahme (521) an der besagten Vorrichtung (500) anzubringen, ohne den besagten Handgriff (503) oder einen seiner Teile (503a, 503b) abzunehmen; wobei die besagte Schaltungseinheit (1) **dadurch gekennzeichnet** ist, dass die besagten mechanischen Verbindungsmittel (5) so geformt sind, dass die besagte Schaltungseinheit (1) in der besagten Aufnahme (521) an die besagte Vorrichtung (500) angebracht werden kann, indem zuerst die besagte Schaltungseinheit (1) entlang einer ersten Richtung (30) zu der besagten Aufnahme (521) hin bewegt wird und anschließend die besagte Schaltungseinheit (1) entlang einer zweiten Richtung (3) bewegt wird, die im Wesentlichen lotrecht zu der besagten ersten Richtung (3) steht, so dass die besagte Schaltungseinheit (1) in ihre endgültige Arbeitsposition in der besagten Aufnahme (521) gebracht wird; und **dadurch gekennzeichnet, dass** die besagten ersten elektrischen Verbindungsmittel (6) so geformt sind, dass sie elektrisch mit den besagten elektrischen Verbindungsmitteln (505) verbunden sind, wenn die besagte Schaltungseinheit (1) entlang der besagten zweiten Richtung (3) bewegt wird.

2. Schaltungseinheit gemäß eines jeden der vorstehenden Patentansprüche, **dadurch gekennzeichnet, dass** die besagten, mechanischen Verbindungsmittel (5) des Weiteren Führungselemente (12) aufweisen.

3. Schaltungseinheit gemäß eines jeden der vorstehenden Patentansprüche, **dadurch gekennzeichnet, dass** sie ein geschlossenes Element mit den von außen zugänglichen besagten, elektrischen Verbindungsmitteln (6) ist.

4. Schaltungseinheit gemäß eines jeden der vorstehenden Patentansprüche, **dadurch gekennzeichnet, dass** die besagten ersten, elektrischen Verbindungsmittel (6) vom Typ mit Schnellkupplung sind.

5. Schaltungseinheit gemäß eines jeden der Patentansprüche von 1) bis 4), **dadurch gekennzeichnet, dass** die besagten ersten elektrischen Verbindungsmittel (6) wenigstens eine aus einem Gehäuse bestehende, elektrische Anschlussklemme (20, 21) umfassen.

6. Schaltungseinheit gemäß eines jeden der vorstehenden Patentansprüche, **dadurch gekennzeichnet, dass** sie dicht ist.

7. Schaltungseinheit gemäß eines der vorstehenden Patentansprüche, **dadurch gekennzeichnet, dass** sie einen Rahmen (2) umfasst, an den ein Bewegungselement (3) entlang einer Achse (50) angelenkt ist, wobei das besagte Bewegungselement (3) mit wenigstens einer elektrischen Anschlussklemme (4a) zusammenwirkt, um sie mit einer zweiten, elektrischen Anschlussklemme (4b) in Kontakt zu versetzen, um einen elektrischen Kontakt zu schließen, wobei der besagte Rahmen (2) mit den besagten, mechanischen Verbindungsmitteln (5) versehen ist.

8. Schweißvorrichtung (18), einen Brennerkörper (502), einen Handgriff (503), einen Schweißkopf (504) und eine in einer Aufnahme (521) aufgenommene Schaltungseinheit (1) umfassend, **dadurch gekennzeichnet, dass** die besagte Schaltungseinheit gemäß den Inhalten eines jeden der Patentansprüche von 1) bis 7) ausgeführt ist.

9. Schneidvorrichtung, einen Brennerkörper (502), einen Handgriff (503), einen Schweißkopf (504) und eine in einer Aufnahme (521) aufgenommene Schaltungseinheit (1) umfassend, **dadurch gekennzeichnet, dass** die besagte Schaltungseinheit gemäß den Inhalten eines jeden der Patentansprüche von 1) bis 7) ausgeführt ist.

10. Vorrichtung gemäß Patentanspruch 8) oder 9), **dadurch gekennzeichnet, dass** die besagte Schaltungseinheit in besagtem Handgriff oder in besagtem Brennerkörper ausgeführt ist.

11. Schweißsystem, einen über ein Kabel (530) an eine Schweißvorrichtung (1) angeschlossenen Generator umfassend, **dadurch gekennzeichnet, dass** die besagte Schweißvorrichtung gemäß den Inhalten von Patentanspruch 8) produziert ist.

12. Plasmaschneidsystem, einen über ein Kabel (530) an eine Schneidvorrichtung angeschlossenen Generator umfassend, **dadurch gekennzeichnet, dass** die besagte Schneidvorrichtung gemäß den Inhalten der Patentansprüche 9) und 10) produziert ist.

## Revendications

1. Élément de commande (1) pour un dispositif de soudage ou de découpe (500) ayant une poignée (503), ledit élément de commande comprenant des moyens (5) pour la connexion mécanique audit dispositif (500) et de premiers moyens de connexion électrique (6) aptes à s'accoupler à de deuxièmes moyens de connexion électrique correspondants (505) appartenant audit dispositif (500) ; lesdits moyens de connexion mécanique (5) comprenant des systèmes à fixation rapide / de désaccouplement, par exemple des vis de blocage (7), des systèmes de jonction ou pivots, aptes à être reçus dans un logement (8) dudit élément de commande (1) de façon à bloquer ledit élément de commande (1) dans sa position de travail finale à l'intérieur d'un siège correspondant (521) et au moins un élément de saillie (9) s'étendant dudit élément de commande (1) et indiqué pour s'insérer dans un siège (511) réalisé dans ledit siège (521) ; où lesdits moyens de connexion électrique (5) sont indiqués pour consentir audit élément de commande (1) d'être appliqué audit dispositif (500) dans ledit siège correspondant (521), sans ôter ladite poignée (503) ou une de ses parties (503a, 503b) ; ledit élément de commande (1) **caractérisé en ce que** lesdits moyens de connexion mécanique (5) ont une forme telle à consentir audit élément de commande (1) d'être appliqué audit dispositif (500) dans ledit siège (521), en déplaçant avant ledit élément de commande (1) le long d'une première direction (30) vers ledit siège (521) et par conséquent en déplaçant ledit élément de commande (1) le long d'une deuxième direction (3) essentiellement perpendiculaire à ladite première direction (3), en positionnant ainsi ledit élément de commande (1) dans sa position de travail finale à l'intérieur dudit siège (521), et **en ce que** lesdits premiers moyens de connexion électrique (6) ont une forme telle à être reliés électriquement auxdits moyens de connexion électrique (505) quand ledit élément de commande (1) est déplacé le long de ladite deuxième direction (3).

2. Élément de commande selon l'une quelconque des revendications précédentes, **caractérisé en ce que** lesdits moyens de connexion mécanique (5) comprennent également des éléments de guidage (12).

3. Élément de commande selon l'une quelconque des revendications précédentes, **caractérisé en ce qu'**il est un élément fermé doté desdits moyens de connexion électrique (6) accessibles de l'extérieur.

4. Élément de commande selon l'une quelconque des revendications précédentes, **caractérisé en ce que** lesdits premiers moyens de connexion électrique (6) sont du type avec à fixation rapide.

5. Élément selon l'une quelconque des revendications de 1) à 4), **caractérisé en ce que** lesdits moyens de connexion électrique (6) comprennent au moins une borne électrique (20, 21) constituée d'un logement.

6. Élément de commande selon l'une quelconque des revendications précédentes, **caractérisé en ce qu'**il est étanche.

7. Élément de commande selon l'une quelconque des revendications précédentes, **caractérisé en ce qu'**il comprend un châssis (2) auquel un élément mobile (3) est fixé à charnière le long d'un axe (50), ledit élément mobile (3) coopérant avec au moins une borne électrique (4a) de façon à le mettre en contact avec une deuxième borne électrique (4b) pour fermer un contact électrique, ledit châssis (2) étant doté desdits éléments de connexion mécanique (5).

8. Dispositif de soudage (18) comprenant un corps de torche (502), une poignée (503), une tête de soudage (504) et un élément de commande (1) reçu dans un siège (521), **caractérisé en ce que** ledit élément de commande est réalisé conformément au contenu d'une quelconque des revendications de 1) à 7).

9. Dispositif de découpe comprenant un corps de torche (502), une poignée (503), une tête de soudage (504) et un élément de commande (1) reçu dans un siège (521), **caractérisé en ce que** ledit élément de commande est réalisé conformément au contenu d'une quelconque des revendications de 1) à 7).

10. Dispositif selon la revendication 8) ou 9), **caractérisé en ce que** ledit siège logeant ledit élément de commande est réalisé dans ladite poignée ou dans ledit corps de torche.

11. Système de soudage comprenant un générateur relié à un dispositif de soudage (1) au moyen d'un câble (530), **caractérisé en ce que** ledit dispositif de soudage est produit conformément au contenu de la revendication 8).

12. Système pour la découpe plasma comprenant un générateur relié à un dispositif de découpe au moyen d'un câble (530), **caractérisé en ce que** ledit dispositif de découpe est produit conformément au contenu des revendications 9) et 10).
